# EUROPEAN PATENT APPLICATION

(11) **EP 4 186 582 A1**
(43) Date of publication of application: **31.05.2023**
(21) Application number: 22197627.7
(22) Date of filing: 26.09.2022
(51) Int. Cl.: B01D 46/681, B01D 46/70, B01D 50/20, B65G 69/18

(54) **A TREMIE DUST COLLECTION UNIT INTEGRATED WITH THE CYCLONE**

(30) Priority: 26.11.2021 TR 202118605
(71) Applicant: Altuntas Havalandirma Turizm Sanayi Ticaret Anonim Sirketi, Aksaray (TR)
(72) Inventor: ALTUNTAS, Osman, AKSARAY (TR)
(74) Representative: Yamankaradeniz, Kemal

(57) **Abstract**

The invention is a tremie dust collection unit (100), which has a grain intake pit (tremie pit) and is used wherever it is desired to collect grain dust and chaff that comes out during grain pouring, wherein; comprising a filter unit (103) connected to the body of the cyclone (101) in order to catch the particles/dust that the cyclone (101) cannot catch and to clean the cloth filter (104); a nozzle unit (106) that sends compressed air to the entire surface of the filter unit (103) by rotating 360°, being narrowed towards the bottom, in order for the air coming from the radial fan (105) to affect the cloth filter (104) surface at an equal pressure and flow rate, and having a conical cross-section towards the air outlet part; and cleaning brushes (112) that are placed in contact with the cloth filter (104) and the lower funnel of the filter unit (103) to prevent the adhesion of especially high-humidity dust to the lower cone of the filter unit (103) and at the same time ensure that the surface of the cloth filter (104) is cleaned.

## Description

### Technical Field

The invention relates to the tremie dust collection unit, which has a grain intake pit (tremie pit) and is used wherever it is desired to collect grain dust and chaff that comes out during grain pouring.

In particular, the invention relates to the tremie dust collection unit integrated into the cyclone, which has simple equipments and structure, and a nozzle system that can rotate 360°around a single filter for cleaning its surface.

### State of the Art

There may be many foreign substances in grains that had mixed in them during cultivation, harvesting, transportation processes, and storage in warehouses. Before wheat is processed and received as the final product, it is a must to purify the wheat from these foreign substances contained in it. Some foreign substances (weed seeds, diseased grains) adversely affect the product quality due to the fact that they contain toxic substances and contributes to the reproduction of microorganisms. Some other foreign substances damage the machines. The foreign substances other than wheat are substances such as broken or damaged grains, stones, soil, stalks, straw, metal fragments, insect waste and some other weed seeds.

In order to obtain the final product meeting the desired quality criteria, it is necessary to ensure a good cleaning of the grain first. Cleaning the grain is not an issue that can be handled only in one step. Because there are many and various foreign substances. For this reason, this process is carried out throughout the phases of receiving, pre-cleaning, main cleaning, annealing and final cleaning. The first step of the cleaning part begins with the receiving and the first step is completed by performing the roughest cleaning of the grain, which is characterized as preliminary cleaning, and sending it to silos for storage. Tremie is the section where the grain arriving at the facility is accepted to the factory after weighing, and they are bunkers with conical surfaces made of concrete or steel, having the appropriate capacity. They are usually made below ground level in order to gain from the altitude. The upper part where the grain is poured is completely closed with an iron grate which ensures the separation of very coarse foreign substances in the product. The product received via tremie is transported to the factory with carrier elements and transferred to the machines to be used in pre-cleaning.

During the pouring of grain into the tremie pits, different densities of dust are emitted to the environment, depending on the characteristics of the grain and its humidity. In order to prevent this dust from spreading to the environment, cyclone or filter systems integrated into the cyclone (jet filter systems) are used in current applications. In systems using cyclones, particles such as shells with a relatively high density can be captured primarily by the effect of centrifugal force and friction. However, it is not possible to capture particles with a low density and exhibiting a flow similar to that of air. In filter systems integrated into the cyclone, on the other hand, particles such as dust, which cannot be captured by the cyclone, are captured by passing over the filter. In systems operating on this principle, the increased dust density on the filter surface causes the system capacity to decrease and requires regular cleaning of the filters. For this reason, compressed air is periodically sent to the surface of the filters by means of solenoid valves. A compressor and a pressurized container are also needed for the production and maintenance of compressed air.

Existing systems that are currently in use have several disadvantages in terms of the high cost of equipments used, the use of compressors for the production of compressed air, the need for a pressurized container to store the air produced and its having a complex structure in terms of periodically feeding this air to the system at a certain pressure, extended time requirements for the periodic maintenance and repair and need for a qualified staff for periodic maintenance and repair. As a result, the need for a tremie dust collection unit that resolves the disadvantages in the present technique and the absence of an existing solution necessitated an improvement in the relevant technical field.

### Brief Description of the Invention

The present invention relates to a tremie dust collection unit, which has a grain receiving pit (tremie pit) that meets the above-mentioned requirements, eliminates all the disadvantages and brings some additional advantages, and is used wherever it is desired to collect the grain dust and husk that comes out during the grain pouring.

Based on the state of the art, the aim of the invention is to provide a design with simpler equipments and structure compared to existing systems, due to the fact that the developed tremie dust collection unit has a nozzle system that can rotate 360°around a single filter.

The aim of the invention is to eliminate the disadvantages of the existing systems, to simplify the structure and to reduce the costs by using a radial fan as a source of compressed air, passing the polluted air over only one cloth filter and cleaning the filter surface by sending the compressed air to the cloth filter with a specially designed 360° rotating nozzle.

Another aim of the invention is to eliminate the need for compressors, valves, pressure vessels, which increase the cost and complicate the structure by using only a single filter with a large surface area.

Another aim of the invention is to facilitate periodic maintenance or repair due to providing a simpler structure of the equipment used, and eliminating the need for highly qualified staff for maintenance and repair.

The structural and characteristic features and all advantages of the invention outlined in the drawings below and in the detailed description made by referring to these figures will be understood clearly; therefore, the evaluation should be made by taking these figures and detailed explanations into consideration.

### Brief Description of Figures

In order to be able to understand the advantages of the present invention together with the additional elements, it is necessary to evaluate it with the figures explained below.
- Figure-1;: shows the schematic view of the tremie dust collection unit,
- Figure-2;: shows the schematic view of the cyclone,
- Figure-3: is the overall view of the air lock,
- Figure-4;: shows the schematic view of the filter unit,
- Figure-5;: shows the schematic view of the nozzle unit on the filter unit,
- Figure-6;: shows the schematic view of the cloth filter on the filter unit,
- Figure-7;: shows the schematic view of the dust capture unit and the electric motor on the filter unit,
- Figure-8;: shows the schematic view of the radial fan,
- Figure-9;: shows the schematic detail view of the nozzle unit,
- Figure-10;: shows the schematic detail view of the air passage coupling,
- Figure-11;: shows the schematic view of the sealing member, inner sleeve and outer sleeve,
- Figure-12a;: shows the schematic view of the air outlet part and the conical section on the nozzle unit,
- Figure-12b;: shows the schematic section view of the nozzle unit,
- Figure-13: is the detail view of the cleaning brushes,
- Figure-14: is a schematic view showing the capturing process of coarse dust,
- Figure-15: is a schematic view showing the cleaning process of the cloth filter.

### Reference Numbers

- 100.: Tremie dust collection unit
- 101.: Cyclone
- 102.: Air lock
- 103.: Filter unit
- 104.: Cloth filter
- 105.: Radial fan
- 106.: Nozzle unit
- 107.: Dust capturing module
- 108.: Air passage coupling
- 109.: Sealing member
- 110.: Inner sleeve
- 111.: Outer sleeve
- 112.: Cleaning brushes
- 113.: Electric motor

### Detailed Description of the Invention

In this detailed description, a tremie dust collection unit (100) of the invention, which has a grain receiving pit (tremie pit) and is used wherever it is desired to collect the grain dust and husk that comes out during the grain pouring process, is explained only as an example for a better understanding of the subject and without any limiting effect.

The tremie dust collection unit (100) shown in Figure-1 has simpler equipment and structure compared to existing applications and systems. The said tremie dust collection unit (100) has a nozzle unit (106) that rotates 360° around a single filter unit (103) to clean the surface and is integrated into the cyclone (101) shown in Figure-2. The said tremie dust collection unit (100) contains an air lock (102) mounted on the cyclone (101) and shown in Figure-3. The said filter unit (103) shown in Figure-4 offers a new approach in terms of capturing the dust and cleaning the cloth filter (104). The nozzle unit (106) shown in Figure-5 is positioned on the said filter unit (103). The cloth filter (104) holding the dust in the said filter unit (103) and shown in Figure-6, has a larger surface area than the filters used in the existing state of the art and is easy to replace. A radial fan (105) is used to clean the said cloth filter (104). An electric motor (113) is placed at the top of the said filter unit (103). The said nozzle unit (106) shown in Figure-9 includes a dust capture unit (107) shown in Figure-7, which prevents dust from dispersing in the cyclone (101) during cleaning of the cloth filter (104) and delivers it to the air lock (102) as a closed circuit. The air passage coupling (108) shown in Figure-10 ensures that the air coming from the radial fan (105) shown in Figure-8 is transferred to the nozzle unit (106) and that the nozzle unit (106) rotates around the filter unit (103). On the upper part of the nozzle unit (106) shown in Figure-11, there is a sealing element (109) to transfer the air coming from the radial fan (105) to the nozzle unit (106) without losing pressure and flow, an inner sleeve (110) for connecting the air passage coupling (108) to the nozzle unit (106) and transferring the air from the radial fan (105) to the rotating nozzle unit (106), and there is a fixed outer sleeve (111) positioned on the rotating inner sleeve (110) to transfer the air to the nozzle unit (106), connected to the end of the air line coming from the radial fan (105) of the air passage coupling (108). There is an air outlet section in the form of a hole extending from one end to the other on the nozzle unit (106) shown in Figure-12a. The said nozzle unit (106) has a conical cross-section with a wider nozzle cross-section at the top with a narrowing one at the bottom. The air entering from the wider part compared to the lower part comes out of the air outlet section along the nozzle unit (106) in the inner section that narrows downwards. The nozzle unit (106) shown in Figure-12b allows compressed air to be sent by rotating 360° to the surface of the entire filter unit (103) and at the same time, due to its construction, the air exits at an equal flow rate and pressure. The nozzle unit (106) is designed in such a way that the air coming from the radial fan (105) operates on whole surface of the cloth filter (104) at an equal pressure and flow rate. The section was narrowed towards the lower part and tapered towards the air outlet part. The narrowed section prevented more air flow to the lower part, and the tapered section prevented the air pressure from decreasing. In this way, homogeneous air pressure and flow rate were provided from the nozzle unit (106) throughout the entire section. The cleaning brushes (112) placed in contact with the cloth filter (104) and the lower funnel of the filter unit (103) shown in Figure-13 prevent the adhesion of especially high-humidity dust to the lower cone of the filter unit (103) and at the same time ensure that the surface of the cloth filter (104) is cleaned.

For the assembly of the tremie dust collection unit (100) of the invention, first, the air lock (102) is installed in the cyclone (101) body, and then the filter unit (103) is mounted in the cyclone (101) body. After the installation of the filter unit (103), the assembly is completed by installing the radial fan (105) and the filter housing.

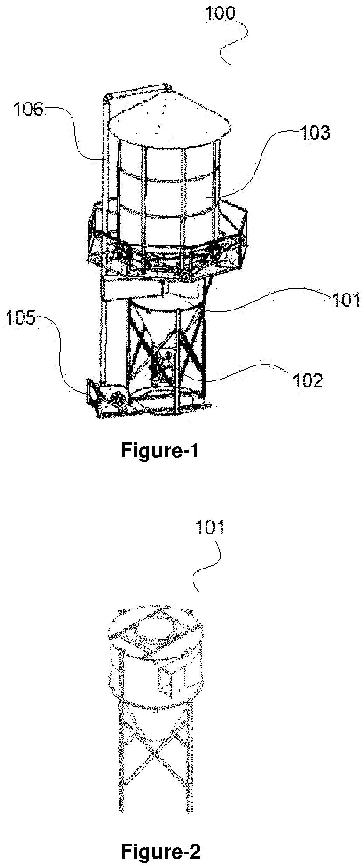

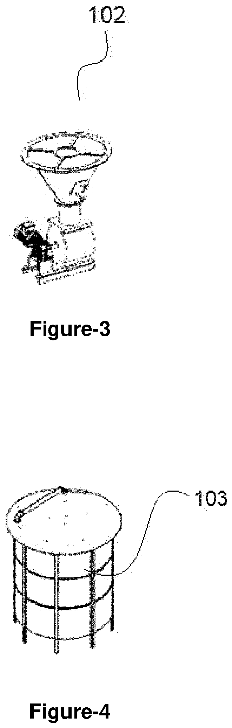

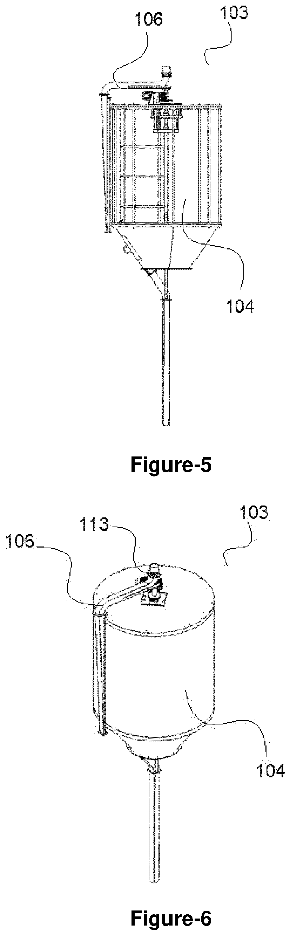

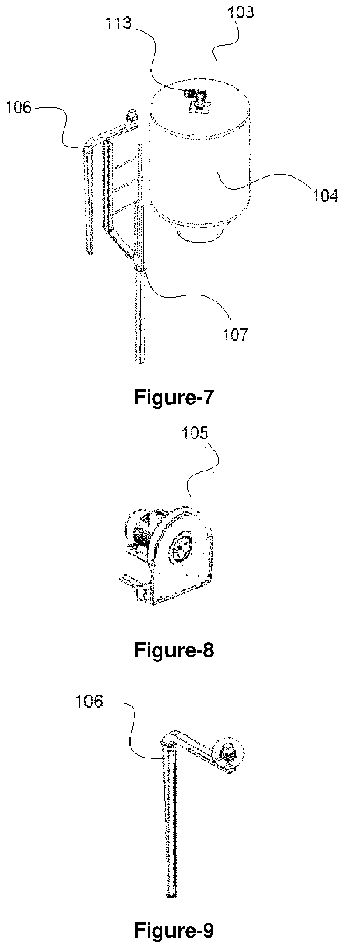

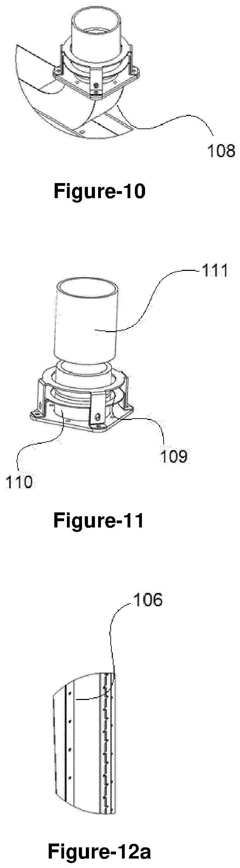

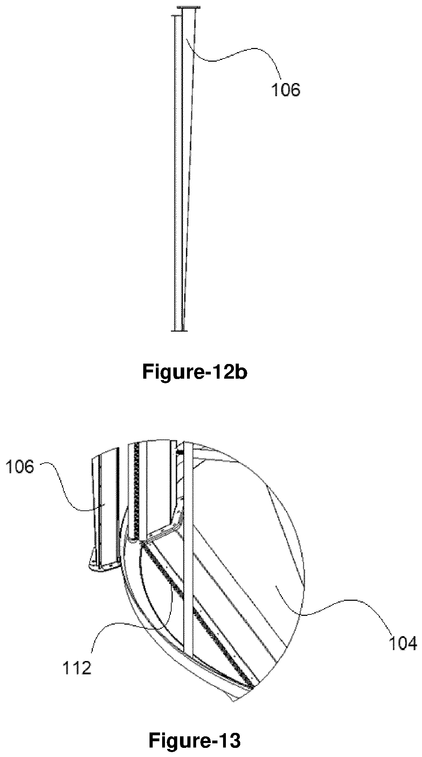

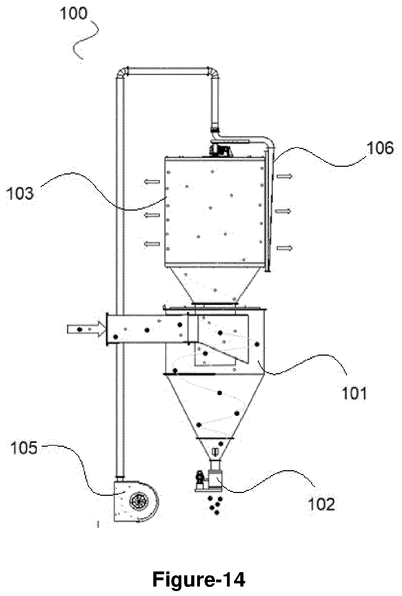

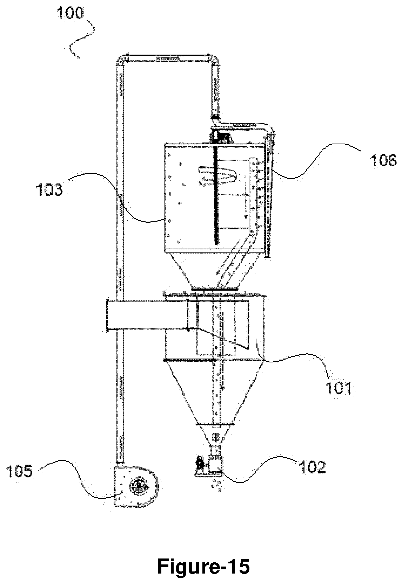

The dust sucked from the grain pit enters the tremi dust collection unit (100) shown in Figure 14 from the cyclone (101) section. Relatively massive particles move to the lower part of the cyclone (101) within the framework of the operation principle of the cyclone (101) and are expelled with the help of the air lock (102). The particles that the cyclone (101) cannot capture are transferred to the filter unit (103). The dust is kept by the cloth filter (104) and fresh air is supplied to the environment. The dust remaining on the cloth filter (104) is cleaned by means of compressed air provided to the cloth filter (104). Radial fan (105) was used as the air source. The generated air is transferred to the nozzle unit (106) via the air passage coupling (108). The said air passage coupling (108) is designed to allow the nozzle unit (106) to rotate 360° around the cloth filter (104). The air passage coupling (108) comprises inner sleeve (110), outer sleeve (111) and a sealing member (109). The inner sleeve (110) of the air passage coupling (108) is fixed to the upper part of the nozzle unit (106). The center of the inner sleeve (110) is positioned to be the center of rotation of the nozzle unit (106), which rotates around the cloth filter (104). The nozzle unit (106) is driven by an electric motor (113) mounted on the upper part of the filter system (103). The outer sleeve (111) of the air passage coupling (108) is located at the end of the compressed air line. The sealing member (109) is placed between the inner sleeve (110) and the outer sleeve (111). In this way, the inner sleeve (110) rotates inside the outer sleeve (111), allowing the nozzle unit (106) to rotate around the cloth filter (104). In addition, the sealing member (109) prevents compressed air from leaving the system.

The air in contact with the cloth filter (104) through the nozzle unit (106) shown in Figure-15 cleans the dust on the cloth filter (104) by pushing them toward the inner part.

The pushed dust is trapped by the nozzle unit (106) and the synchronous dust capturing module (107). Thus, no new/additional pollution is allowed inside the filter unit (103). The dust capturing module(107) ensures that the dust that comes out during the cleaning of the cloth filter (104) reaches the air lock (102) without being affected by any situation in the indoor environment and is thrown out.

## Claims

1. A tremie dust collection unit (100), which has a grain intake pit (tremie pit) and is used wherever it is desired to collect grain dust and chaff that comes out during grain pouring, **characterized by comprising;**
- a filter unit (103) connected to the body of a cyclone (101) in order to catch the particles/dust that the cyclone (101) cannot catch and to clean a cloth filter (104);
- a nozzle unit (106) that sends compressed air to the entire surface of the filter unit (103) by rotating 360°, being narrowed towards the bottom, in order for the air coming from a radial fan (105) to affect the cloth filter (104) surface at an equal pressure and flow rate, and having a conical cross-section towards the air outlet part;
- cleaning brushes (112) that are placed in contact with the cloth filter (104) and the lower funnel of the filter unit (103) to prevent the adhesion of especially high-humidity dust to the lower cone of the filter unit (103) and at the same time ensure that the surface of the cloth filter (104) is cleaned.

2. A tremie dust collection unit (100) according to Claim 1, **characterized by** comprising; the cloth filter (104) that keeps the dust.

3. A tremie dust collection unit (100) according to Claim 1, **characterized by** comprising; the radial fan (105) for cleaning of the cloth filter (104).

4. A tremie dust collection unit (100) according to Claim 1, **characterized by** comprising; a dust capturing unit (107) to prevent dust from dispersing in the cyclone (101) during cleaning of the cloth filter (104) and to deliver it to the air lock (102) via a closed circuit.

5. A tremie dust collection unit (100) according to Claim 1, **characterized by** comprising; an air passage coupling (108) for transferring the air coming from the radial fan (105) to the nozzle unit (106) and for the nozzle unit (106) to rotate around the filter unit (103).

6. A tremie dust collection unit (100) according to Claim 1, **characterized by** comprising; a sealing member (109) positioned at the top of the nozzle unit (106) in order to transfer the air coming from the radial fan (105) to the nozzle unit (106) without losing pressure and flow.

7. A tremie dust collection unit (100) according to Claim 1, **characterized by** comprising; an inner sleeve (110) positioned at the top of the nozzle unit (106) to connect the air passage coupling (108) to the nozzle unit (106) and to transfer the air coming from the radial fan (105) to the rotating nozzle unit (106).

8. A tremie dust collection unit (100) according to Claim 1, **characterized by** comprising; a fixed outer sleeve (111) positioned on the rotating inner sleeve (110) for the transfer of air to the nozzle unit (106), connected to the last part of the air line from the radial fan (105) of the air passage coupling (108).
